# EUROPEAN PATENT SPECIFICATION

(11) **EP 1 267 131 B1**
(45) Date of publication and mention of the grant of the patent: **18.10.2006**
(21) Application number: 02012591.0
(22) Date of filing: 06.06.2002
(51) Int. Cl.: F24F 3/06, F24F 11/00

(54) **Device for controlling expansion valve in multi air condition system**
Vorrichtug zum Steuern eines Entspannungsventils für eine Mehrzonenklimaanlage
Dispositif de commande d'une vanne d'expansion dans un système de conditionnement d'air à unités multiples

(30) Priority: 11.06.2001 KR 2001032607
(43) Date of publication of application: 18.12.2002
(73) Proprietor: LG ELECTRONICS INC., Seoul (KR)
(72) Inventor: Lee, Byung Hoon, Kwangmyong-shi, Kyonggi-do (KR)
(74) Representative: Vetter, Ewald Otto

(56) References cited:
- PATENT ABSTRACTS OF JAPAN vol. 1999, no. 04, 30 April 1999 (1999-04-30) -& JP 11 023038 A (MITSUBISHI HEAVY IND LTD), 26 January 1999 (1999-01-26)
- PATENT ABSTRACTS OF JAPAN vol. 1998, no. 04, 31 March 1998 (1998-03-31) -& JP 09 318142 A (HITACHI LTD), 12 December 1997 (1997-12-12)
- PATENT ABSTRACTS OF JAPAN vol. 2000, no. 06, 22 September 2000 (2000-09-22) -& JP 2000 088321 A (DAIKIN IND LTD), 31 March 2000 (2000-03-31)

## Description

### BACKGROUND OF THE INVENTION

### Field of the Invention

The present invention relates to a multi air condition system, and more particularly, to a device for controlling expansion valves in a multi air condition system having a plurality of indoor units.

### Background of the Related Art

The document JP 11023038 discloses an air conditioner having a plurality of indoor units. The conventional system is provided with a plurality of valves which are individually provided on heat exchangers. The heat exchanger are provided on a plurality of indoor units. Further, the conventional air conditioner comprises a plurality of driving means commonly connected to a plurality of valves among the valves, and control means to drive each valve commonly connected to a plurality of driving means at least one by one by a plurality of driving means.

In general, the air conditioner implements room cooling/heating by mechanical change of a phase of refrigerant, and making heat exchange between the phase changed refrigerant and room air. A refrigerating cycle of the air conditioner is made as the refrigerant passes through a compressor, an outdoor heat exchanger, a capillary tube, and an indoor heat exchanger. In this instance, the refrigerant circulates in a regular or reverse direction of the refrigerating cycle depending on a switching direction of an electronic expansion valve in the room cooling/heating.

In the air condition systems, there are a multi air condition system having a plurality of indoor units and one outdoor unit, a separate type air condition system having one outdoor unit and one indoor unit, and a unified type air condition system having the outdoor unit and the indoor unit integrated into one unit.

The refrigerating cycle of the multi air condition system can make air condition a plurality of rooms each having an indoor unit installed therein. The multi air condition system has a plurality of indoor heat exchangers, each with a capillary tube connected in series, and an electronic expansion valve for blocking a refrigerant flow such that the air conditioning is made only to desired places. Accordingly, operation of the plurality of the indoor units can be made by controlling the expansion valves.

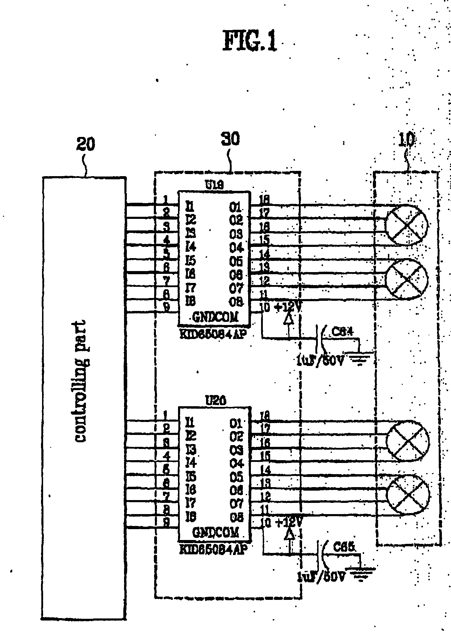

FIG. 1 illustrates a related art device for controlling expansion valves of a multi air condition system.

Referring to FIG. 1, the related art device for controlling expansion valves of a multi air condition system is provided with an expansion valve driving part 10 for driving an electronic expansion valve, a controlling part 20 for controlling a plurality of the electronic expansion valve driving parts 10, and amplifying part 30 connected between the expansion valve driving parts 10 and the controlling part 20 for amplifying a control signal from the controlling part 20.

The operation of the related art device for controlling expansion valves of a multi air condition system will be explained.

At first, the controlling part provides a control signal for maintaining a refrigerant flow rate to the indoor unit and controlling a switching direction of the electronic expansion valve 10.

The control signal from the controlling part 20 is amplified through the amplifying part 30, and provided to the expansion valve driving part 10. The expansion valve driving part 10 drives the electronic expansion valve in response to the control signal.

Each of the amplifying parts 30 is connected to every 8 output ports of the controlling part 20. One amplifying part 30 is connected to two expansion valve driving parts 10, and each expansion valve driving part 10 is connected to every 4 output ports of the amplifying part 30. That is, the related art device for controlling expansion valves in a multi air condition system requires four output ports of the controlling part 20 for controlling one electronic expansion valve.

Therefore, if a number of indoor units is increased by more than 6, a number of the output ports of the controlling part 20 lacks, causing a problem that one controlling part 20 can not control all the electronic expansion valves.

### SUMMARY OF THE INVENTION

Accordingly, the present invention is directed to a device for controlling expansion valves in a multi air condition system that substantially obviates one or more of the problems due to limitations and disadvantages of the related art.

An object of the present invention is to provide a device for controlling expansion valves in a multi air condition system, which can make an effective control of a plurality of electronic expansion valves by using one controlling part without being limited by a number of ports of the controlling part.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the device for controlling expansion valves in a multi air condition system having a plurality of indoor units includes an expansion valve driving part for driving expansion valves in response to a control signal, a controlling part having a communication port set for providing a control signal in correspondence to an external order signal, and a plurality of selective output ports, and a plurality of output port extending parts having input port set connected to the communication port set in the controlling part in parallel, and a selective input port set connected to one of the selective output ports in the controlling part in series, for transmitting the control signal from the communication port set in the controlling part to a relevant expansion valve driving part in response to the switching signal from the selective output port in the controlling part.

Each of the expansion valve driving parts has one expansion valve connected thereto, and each of the output port extending parts has two expansion valve driving parts connected thereto.

The communication port set in the controlling part is connected to one data bus, and the data bus has input port sets of the output port extending parts connected in parallel.

In another aspect of the present invention, there is provided a device for controlling expansion valves in a multi air condition system having a plurality of indoor units, including a controlling part having a communication port set for providing a control signal in correspondence to an external order signal, and a plurality of selective output ports, at least one input port extending part having an output port set connected to the communication port set in the controlling part in parallel, and a selective input port set connected to one of the selective output ports in the controlling part in series, for providing an external control signal to the communication port set in the controlling part through the output port set in response to the switching signal from the selective output port in the controlling part, a plurality of output port extending parts having input port set connected to the communication port set in the controlling part in parallel, and a selective input port connected to one of the selective output ports in the controlling part in series, for transmitting the control signal from the selective output port in the controlling part in response to the switching signal from the selective output port in the controlling part, an amplifying part for amplifying and forwarding the control signal from the output port extending part, and an expansion valve driving part for driving the expansion valve according to the control signal amplified in the amplifying part.

The output port extending part and the amplifying part are arranged to be matched in one to one fashion, and each of the amplifying parts has two expansion valve driving part connected thereto, and each of the expansion valve driving parts has one expansion valve connected thereto.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention:
In the drawings:
FIG. 1 illustrates a related art device for controlling expansion valves of a multi air condition system, schematically; and
FIG. 2 illustrates a device for controlling expansion valves of a multi air condition system in accordance with a preferred embodiment of the present invention, schematically.

### DETAILED DESCRIPTION OF THE PREFERRED EMBODIMENT

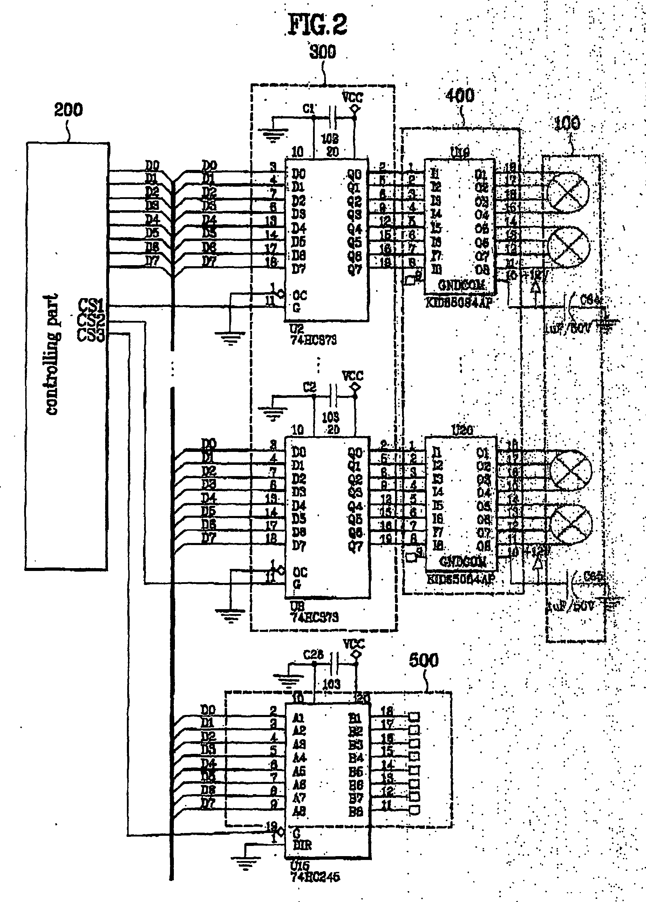

Reference will now be made in detail to the preferred embodiments of the present invention, examples of which are illustrated in the accompanying drawings. FIG. 2 illustrates a device for controlling expansion valves of a multi air condition system in accordance with a preferred embodiment of the present invention, schematically.

Referring to FIG. 2, the device for controlling expansion valves of a multi air condition system includes an expansion valve driving part 100 for driving electron expansion valves, a controlling part 200 for controlling a plurality of electron expansion valve driving parts 100, input/output port extending parts 500, and 300, and an amplifying part 400 connected between the expansion valve driving part 10, and the controlling part 20.

The controlling part 200, a microprocessor, has a communication port set D0 - D7 for providing control signals in correspondence to external order signals, and a plurality of selective output ports CS1 - CSn. The controlling part 200 has 8 communication ports in total connected to a data bus in parallel.

The input port set D0 - D7 on each of the output port extending parts 300 is connected to a data bus in parallel, and the input port sets G on each of the output port extending parts 300 has one of the selective output ports CS1 - CSn of the controlling part 200 connected in series thereto.

The output port extending part 300 has a plurality of 8 bit latches connected to a data bus. When an OC (OUTPUT CONTROL) is high, the output port extending part 300 has an output of a high impedance.

Therefore, the present invention makes the OC (OUTPUT CONTROL) of the output port extending part 300 to be low for use as an output port. That is, if 'G', a latch enable port, is at high, all input values are forwarded, and, if 'G' is at low, a state of the forwarding is held.

Referring to FIG. 2, for extending the input ports of the controlling part 200 of the present invention, the input port extending part 500 may be connected to the data bus. An output port set A1 - A8 on the input port extending part 500 is connected to the data bus in parallel, and selective input port G on the input port extending part 500 is connected to one of the selective output ports CS1 - CSn on the controlling part 200 in series.

The input port extending part 500, a two-way buffer, has a data moving from 'A' to 'B' when 'DIR' is at high and /G is at low, and moving from 'B' to 'A' when 'DIR' is at low and /G is at low.

The input port extending part of the present invention sets the DIR to be at low for use as a data input port. The amplifying part 400 is arranged so as to be one to one matched to the output port extending part 300.

An input port set I1 - I8 of the amplifying part 400 is connected to an output port set Q0 - Q7 on the output port extending part 300 in one to one fashion, and every four output port set of the output port set 01 - 08 is connected to one expansion valve driving part. The amplifying part 400 is a darlington transistor. The amplifying part 400, provided for amplifying the control signal, may be omitted in view of design. Each of the expansion valve driving parts 100 has one expansion valve connected thereto.

The operation of the foregoing device for controlling expansion valves in a multi air condition system of the present invention will be explained.

At first, the controlling part receives an external order signal either directly or through the input port extending part 500, for controlling a refrigerant flow rate to the indoor unit and a switching direction of the electronic expansion valve. The external order signal through the input port extending part 500 is provided to the controlling part 200 through the data bus.

Then, the controlling part 200 provides a control signal in response to a received signal. The control signal from the controlling part 200 is provided to a relevant output port extending part 300 through a data bus.

The output port extending part 300 transmits the control signal from the communication port set on the controlling part 200 in response to a switching signal from the selective output port on the controlling part 200.

The amplifying part 400 amplifies the control signal from the output port extending part, and provides to a relevant expansion valve driving part 100, and the expansion valve driving part 100 drives a relevant expansion valve in response to the control signal.

Therefore, the device for controlling expansion valves in a multi air condition system of the present invention is suitable for a multi air condition system having a plurality of indoor units because a number of input/output ports of the controlling part can be extended. That is, the device for controlling expansion valves in a multi air condition system of the present invention can make an effective control of a plurality of expansion valves by using only one controlling part without any additional controlling part, thereby reducing a production cost and enhance a productivity.

It will be apparent to those skilled in the art that various modifications and variations can be made in the device for controlling expansion valves in a multi air condition system of the present invention without departing from the scope of the invention. Thus, it is intended that the present invention cover the modifications and variations of this invention provided they come within the scope of the appended claims and their equivalents.

## Claims

1. A device for controlling expansion valves in a multi air condition system having a plurality of indoor units, comprising:
- an expansion valve driving part (100) for driving expansion valves in response to a control signal; and
- a controlling part (200) having a communication port set (D0 - D7) for providing a control signal in correspondence to an external order signal, and a plurality of selective output ports (CS1 - CSn),
**characterized in that**
the device further comprises a plurality of output port extending parts (300) having input port set (D0 - D7) connected to the communication port set (D0 - D7) in the controlling part (200) in parallel, and a selective input port set (G) connected to one of the selective output ports (CS1 - CSn) in the controlling part (200) in series, for transmitting the control signal from the communication port set (D0 - D7) in the controlling part (200) to a relevant expansion valve driving part (100) in response to the switching signal from the selective output port (CS1 - CSn) in the controlling part (200).

2. A device as claimed in claim 1, wherein each of the expansion valve driving parts (100) has one expansion valve connected thereto.

3. A device as claimed in claim 1 or 2, wherein each of the output port extending parts (300) has two expansion valve driving parts (100) connected thereto.

4. A device as claimed in at least one of the preceding claims, wherein the controlling part (200) has 8 communication ports in the communication port set (D0 - D7).

5. A device as claimed in at least one of the preceding claims, wherein the output port extending part (300) has 8 ports in the input/output port set (300; 500), every four of which are connected to one of the expansion valve driving parts (100).

6. A device as claimed in at least one of the preceding claims, wherein the communication port set (D0 - D7) in the controlling part (200) is connected to one data bus, and the data bus has input port sets (D0 - D7) of the output port extending parts (500) connected in parallel.

7. A device as claimed in at least one of the preceding claims, wherein the output port extending part (300) is an 8 bit latch.

8. A device as claimed in at least one of the preceding claims, further comprising input port extending parts (500) each including output port set (A1 - A8) connected to the communication port set (D0 - D7) in the controlling part (200) in parallel, and selective input port (G) connected to one of the selective output port (CS1 - CSn) in the controlling part (200) in series, for providing an external order signal to the communication port set (D0 - D7) in the controlling part (200) through the output port set (A1 - A8) in response to the switching signal received from the selective output port (CS1 - CSn) in the controlling part (200).

9. A device as claimed in claim 8, wherein the input port extending part (500) is a two way buffer.

10. A device as claimed in at least one of the preceding claims, further comprising an amplifying part (400) connected between the output port extending part (300) and the expansion valve driving part (100) electrically, for amplifying the control signal.

11. A device as claimed in claim 10, wherein the amplifying part (400) is a darlington transistor.

12. A device as claimed in claim 1, comprising:
- at least one input port extending part (500) having an output port set (A1 - A8) connected to the communication port set (D0 - D7) in the controlling part (200) in parallel, and a selective input port set (G) connected to one of the selective output ports (CS1 - CSn) in the controlling part (200) in series, for providing an external control signal to the communication port set (D0 - D7) in the controlling part (200) through the output port set (A1 - A8) in response to the switching signal from the selective output port (CS1 - CSn) in the controlling part (200); and
- an amplifying part (400) for amplifying and forwarding the control signal from the output port extending part (300); wherein
the expansion valve is driven by the expansion valve driving part (100) according to the control signal amplified in the amplifying part (400).

13. A device as claimed in claim 12, wherein the output port extending part (300) and the amplifying part (400) are arranged to be matched in one to one fashion.

14. A device as claimed in claim 12 or 13, wherein each of the amplifying parts (400) has two expansion valve driving part (100) connected thereto, and each of the expansion valve driving parts (100) has one expansion valve connected thereto.

15. A device as claimed in at least one of claims 12 to 14, wherein numbers of ports in the communication port set (D0 - D7) in the controlling part (200), and the input/output port set (I1 - I8; Q0 - Q7) of the amplifying part (400) and the output port extending part (300) are 8 respectively, and one expansion valve driving part (100) is connected to every four ports of the output port set (Q0 - Q7) in the amplifying part (400).

16. A device as claimed in at least one of claims 12 to 15, wherein the communication port set (D0 - D7) in the controlling part (200) has one data bus connected thereto, and the data bus has the input port sets (D0 - D7) of the output port extending parts (300) and the output port sets (A1 - A8) in the input port extending part (500) connected thereto in parallel.

17. A device as claimed in at least one of claims 12 to 16, wherein the output port extending part (300) is an 8 bit latch, and the input port extending part is (500) a two way buffer, and the amplifying part (400) is a darlington transistor.

## Patentansprüche

1. Vorrichtung zum Steuern eines Expansionsventils in einem Mehrzonenklimaanlagensystem mit einer Mehrzahl von Innenraumeinheiten, aufweisend:
- einen Expansionsventil-Antriebsteil (100) zum Antreiben der Expansionsventile als Antwort auf ein Steuersignal; und
- einen Steuerungsteil (200) mit einem Kommunikationsportsatz (D0-D7) zur Lieferung eines Steuersignals entsprechend einem externen Befehlssignal und eine Mehrzahl von selektiven Ausgabeports (CS1-CSn),
**dadurch gekennzeichnet,**
**dass** die Vorrichtung ferner eine Mehrzahl von Ausgabeport-Erweiterungsteilen (300) mit einem Eingabeportsatz (D0-D7), der mit dem Kommunikationsportsatz (D0-D7) im Steuerungsteil (200) parallel verbunden ist, und einen selektiven Eingabeportsatz (G) aufweist, der mit einem der selektiven Ausgabeports (CS1-CSn) im Steuerungsteil (200) in Reihe verbunden ist, um das Steuersignal vom Kommunikationsportsatz (D0-D7) im Steuerungsteil (200) zu einem relevanten Expansionsventil-Antriebsteil (100) als Antwort auf das Schaltsignal vom selektiven Ausgabeport (CS1-CSn) im Steuerungsteil (200) zu übertragen.

2. Vorrichtung nach Anspruch 1, wobei jeder der Expansionsventil-Antriebsteile (100) je ein Expansionsventil damit verbunden hat.

3. Vorrichtung nach Anspruch 1 oder 2, wobei jeder der Ausgabeport-Erweiterungsteile (300) zwei Expansionsventil-Antriebsteile (100) damit verbunden hat.

4. Vorrichtung nach mindestens einem der vorhergehenden Ansprüche, wobei der Steuerungsteil (200) acht Kommunikationsports im Kommunikationsportsatz (D0-D7) aufweist.

5. Vorrichtung nach mindestens einem der vorhergehenden Ansprüche, wobei der Ausgabeport-Erweiterungsteil (300) acht Ports im Eingabe-/Ausgabeportsatz (300; 500) aufweist, wobei je vier davon mit einem der Expansionsventil-Antriebsteile (100) verbunden sind.

6. Vorrichtung nach mindestens einem der vorhergehenden Ansprüche, wobei der Kommunikationsportsatz (D0-D7) im Steuerungsteil (200) mit einem Datenbus verbunden ist, und der Datenbus Eingabeportsätze (D0-D7) der Ausgabeport-Erweiterungsteile (500) parallel verbunden hat.

7. Vorrichtung nach mindestens einem der vorhergehenden Ansprüche, wobei der Ausgabeport-Erweiterungsteil (300) ein 8-Bit-Signalspeicher ist.

8. Vorrichtung nach mindestens einem der vorhergehenden Ansprüche, ferner aufweisend Eingabeport-Erweiterungsteile (500), welche je einen Ausgabeportsatz (A1-A8) aufweisen, der mit dem Kommunikationsportsatz (D0-D7) im Steuerungsteil (200) parallel verbunden ist, und einen selektiven Eingabeport (G), der mit einem der selektiven Ausgabeports (CS1-CSn) in dem Steuerungsteil (200) in Reihe verbunden ist, um ein externes Befehlssignal an den Kommunikationsportsatz (D0-D7) im Steuerungsteil (200) durch den Ausgabeportsatz (A1-A8) als Antwort auf das Schaltsignal, das von dem selektiven Ausgabeport (CS1-CSn) im Steuerungsteil (200) erhalten wird, zu liefern.

9. Vorrichtung nach Anspruch 8, wobei der Eingabeport-Erweiterungsteil (500) ein Zweiwegepuffer ist.

10. Vorrichtung nach mindestens einem der vorhergehenden Ansprüche, ferner aufweisend einen Verstärkerteil (400), der zwischen dem Ausgabeport-Erweiterungsteil (300) und dem Expansionsventil-Antriebsteil (100) elektrisch verbunden ist, um das Steuersignal zu verstärken.

11. Vorrichtung nach Anspruch 10, wobei der Verstärkerteil (400) ein Darlington-Transistor ist.

12. Vorrichtung nach Anspruch 1, aufweisend:
- mindestens einen Eingabeport-Erweiterungsteil (500) mit einem Ausgabeportsatz (A1-A8), der mit dem Kommunikationsportsatz (D0-D7) im Steuerungsteil (200) parallel verbunden ist, und einen selektiven Eingabeportsatz (G), der mit einem der selektiven Ausgabeports (CS1-CSn) im Steuerungsteil (200) in Reihe verbunden ist, um ein externes Steuersignal an den Kommunikationsportsatz (D0-D7) im Steuerungsteil (200) durch den Ausgabeportsatz (A1-A8) als Antwort auf das Schaltsignal von dem selektiven Ausgabeport (CS1-CSn) im Steuerungsteil (200) zu liefern; und
- einen Verstärkerteil (400) zur Verstärkung und Lieferung des Steuersignals vom Ausgabeport-Erweiterungsteil (300); wobei
das Expansionsventil durch den Expansionsventil-Antriebsteil (100) gemäß dem im Verstärkerteil (400) verstärkten Steuersignal angetrieben wird.

13. Vorrichtung nach Anspruch 12, wobei der Ausgabeport-Erweiterungsteil (300) und der Verstärkerteil (400) so angeordnet sind, dass sie eins-zu-eins zusammenpassen.

14. Vorrichtung nach Anspruch 12 oder 13, wobei jeder der Verstärkerteile (400) zwei Expansionsventil-Antriebsteile (100) aufweist, die damit verbunden sind, und jeder der Expansionsventil-Antriebsteile (100) ein Expansionsventil damit verbunden hat.

15. Vorrichtung nach mindestens einem der Ansprüche 12 bis 14, wobei die Anzahl der Ports im Kommunikationsportsatz (D0-D7) im Steuerungsteil (200) und im Eingabe-/Ausgabeportsatz (I1-I8; Q0-Q7) des Verstärkerteils (400) und im Ausgabeport-Erweiterungsteil (300) jeweils acht beträgt, und ein Expansionsventil-Antriebsteil (100) mit je vier Ports des Ausgabeportsatzes (Q0-Q7) im Verstärkerteil (400) verbunden ist.

16. Vorrichtung nach mindestens einem der Ansprüche 12 bis 15, wobei der Kommunikationsportsatz (D0-D7) im Steuerungsteil (200) einen Datenbus damit verbunden hat, und der Datenbus die Eingabeportsätze (D0-D7) der Ausgabeport-Erweiterungsteile (300) und der Ausgabeportsätze (A1-A8) im Eingabeport-Erweiterungsteil (500) parallel damit verbunden hat.

17. Vorrichtung nach mindestens einem der Ansprüche 12 bis 16, wobei der Ausgabeport-Erweiterungsteil (300) ein 8-Bit-Signalspeicher ist, und der Eingabeport-Erweiterungsteil (500) ein Zweiwegepuffer ist und der Verstärkerteil (400) ein Darlington-Transistor ist.

## Revendications

1. Dispositif de commande de détendeurs dans un système de conditionnement d'air à unités multiples doté d'une pluralité d'unités intérieures, comportant :
- une partie d'actionnement de détendeurs (100) destinée à actionner les détendeurs en réponse à un signal de commande ; et
- une partie commande (200) dotée d'un ensemble de ports de communication (D0 - D7) en vue de fournir un signal de commande correspondant à un signal extérieur de consigne, et une pluralité de ports de sortie sélectifs (CS1 - CSn),
**caractérisé en ce que**
le dispositif comprend en outre une pluralité de composants d'extension (300) de ports de sortie, dotés d'un ensemble de ports d'entrée (D0 - D7) relié en parallèle à l'ensemble de ports de communication (D0 - D7) de la partie commande (200), et un ensemble de ports d'entrée sélectifs (G) relié en série à l'un des ports de sortie sélectifs (CS1 - CSn) de la partie commande (200), afin de transmettre le signal de commande depuis l'ensemble de ports d'entrée (D0 - D7) de la partie commande (200) jusqu'à une partie d'actionnement de détendeur (100) appropriée, en réponse au signal de commutation provenant du port de sortie sélectif (CS1 - CSn) de la partie commande (200).

2. Dispositif selon la revendication 1, dans lequel chacune des parties d'actionnements de détendeurs (100) a un détendeur qui lui est relié.

3. Dispositif selon la revendication 1 ou 2, dans lequel chacun des composants d'extension (300) de ports de sortie a deux parties d'actionnements de détendeurs (100) qui lui sont reliées.

4. Dispositif selon au moins l'une des revendications précédentes, dans lequel la partie commande (200) est dotée de 8 ports de communication de l'ensemble de ports de communication (D0 - D7).

5. Dispositif selon au moins l'une des revendications précédentes, dans lequel le composant d'extension (300) de ports de sortie est doté de 8 ports de l'ensemble de ports d'entrée/sortie (300 ; 500), parmi lesquels chaque groupe de quatre est relié à une des parties d'actionnements de détendeurs (100).

6. Dispositif selon au moins l'une des revendications précédentes, dans lequel l'ensemble de ports de communication (D0 - D7) de la partie commande (200) est relié à un bus de données, et le bus de données est relié en parallèle à des ensembles de ports d'entrée (D0 - D7) des composants d'extension (500) de ports d'entrée.

7. Dispositif selon au moins l'une des revendications précédentes, dans lequel le composant d'extension (300) de ports de sortie est un verrou 8 bits.

8. Dispositif selon au moins l'une des revendications précédentes, comportant en outre des composants d'extension (500) de ports d'entrée comprenant chacun un ensemble de ports de sortie (A1 - A8) relié en parallèle à l'ensemble de ports de communication (D0 - D7) de la partie commande (200), et un port d'entrée sélectif (G) relié en série à l'un des ports de sortie sélectifs (CS1 - CSn) de la partie commande (200), afin de fournir un signal extérieur de consigne à l'ensemble de ports de communication (D0 - D7) de la partie commande (200) à travers l'ensemble de ports de sortie (A1 - A8) en réponse au signal de commutation reçu depuis le port de sortie sélectif (CS1 - CSn) de la partie commande (200).

9. Dispositif selon la revendication 8, dans lequel le composant d'extension (500) de ports d'entrée est un tampon bidirectionnel.

10. Dispositif selon au moins l'une des revendications précédentes, comportant en outre une partie amplificatrice (400) électriquement branchée entre le composant d'extension (300) de ports de sortie et la partie d'actionnement de détendeurs (100) en vue d'amplifier le signal de commande.

11. Dispositif selon la revendication 10, dans lequel la partie amplificatrice (400) est un transistor Darlington.

12. Dispositif selon la revendication 1, comportant :
- au moins un composant d'extension (500) de ports d'entrée doté d'un ensemble de ports de sortie (A1 - A8) relié en parallèle à l'ensemble de ports de communication (D0 - D7) de la partie commande (200), et d'un ensemble de ports d'entrée sélectifs (G) relié en série à l'un des ports de sortie sélectifs (CS1 - CSn) de la partie commande (200), afin de fournir un signal extérieur de commande à l'ensemble de ports de communication (D0 - D7) de la partie commande (200) à travers l'ensemble de ports de sortie (A1 - A8) en réponse au signal de commutation provenant du port de sortie sélectif (CS1 - CSn) de la partie commande (200) ; et
- une partie amplificatrice (400) en vue d'amplifier le signal de commande et de le transmettre depuis le composant d'extension (300) de ports de sortie ;
le détendeur étant actionné par la partie d'actionnement de détendeurs (100) en fonction du signal de commande amplifié par la partie amplificatrice (400).

13. Dispositif selon la revendication 12, dans lequel le composant d'extension (300) de ports de sortie et la partie amplificatrice (400) sont agencés de manière à être en correspondance bi-univoque.

14. Dispositif selon la revendication 12 ou 13, dans lequel chacune des parties amplificatrices (400) a deux parties d'actionnements de détendeurs (100) qui lui sont reliées, chacune des parties d'actionnements de détendeurs (100) ayant un détendeur qui lui est relié.

15. Dispositif selon l'une des revendications 12 à 14, dans lequel les ports de l'ensemble de ports de communication (D0 - D7) de la partie commande (200), ceux de l'ensemble de ports d'entrée/sortie (I1 - I8 ; Q0 - Q7) de la partie amplificatrice (400) et ceux du composant d'extension (300) de ports de sortie sont au nombre de 8, respectivement et une partie d'actionnement de détendeurs (100) est reliée à chaque groupe de quatre ports de l'ensemble de ports de sortie (Q0 - Q7) de la partie amplificatrice (400).

16. Dispositif selon l'une au moins des revendications 12 à 15, dans lequel l'ensemble de ports de communication (D0 - D7) de la partie commande (200) a un bus de données qui lui est relié, et l'ensemble de ports d'entrée (D0 - D7) du composant d'extension (300) de ports de sortie et l'ensemble de ports de sortie (A1 - A8) du composant d'extension (500) de ports d'entrée sont reliés en parallèle au bus de données.

17. Dispositif selon l'une au moins des revendications 12 à 16, dans lequel le composant d'extension (300) de ports de sortie est un verrou 8 bits, le composant d'extension (500) de ports d'entrée est un tampon bidirectionnel et la partie amplificatrice (400) est un transistor Darlington.
